(19) Europäisches Patentamt
European Patent Office
Office européen des brevets

(11) Publication number: **0 217 397 B1**

(12) # EUROPEAN PATENT SPECIFICATION

(45) Date of publication of patent specification: **09.12.92**

(51) Int. Cl.5: **C08L 27/06**, //(C08L27/06, 33:04),(C08L27/06,31:02)

(21) Application number: **86113616.6**

(22) Date of filing: **02.10.86**

(54) **Method for melt-processing polyvinyl chloride and a melt-processable polyvinyl chloride composition.**

(30) Priority: **03.10.85 US 783509**

(43) Date of publication of application: **08.04.87 Bulletin 87/15**

(45) Publication of the grant of the patent: **09.12.92 Bulletin 92/50**

(84) Designated Contracting States: **AT BE CH DE ES FR GB GR IT LI LU NL SE**

(56) References cited:
**DE-A- 1 669 911**
**LU-A- 58 419**
**US-A- 2 247 064**

(73) Proprietor: **The B.F. GOODRICH Company**
**Dept. 0015 WHB-6 500 South Main Street**
**Akron, Ohio 44318(US)**

(72) Inventor: **Teyssie, Philippe**
**Bois de Rognac 85A**
**B-4121 Neuville-Neupre(BE)**
Inventor: **Sidles, James**
**3048 Southern Road**
**Richfield Ohio 44286(BE)**
Inventor: **Schrynemackers, Jean**
**Route de Bleurmont 15A**
**B-4920 Chaudfontaine(BE)**
Inventor: **Fayt, Roger**
**Route de Condroz 144A**
**B-4121 Neuville-Neupre(BE)**
Inventor: **Blayne, John Jerome**
**8674 Weise Road**
**Brecksville Ohio 44141(US)**
Inventor: **Shimandle, Donald James**
**1096 Navajo Trail**
**Streetsboro Ohio 44240(US)**

(74) Representative: **von Kreisler, Alek, Dipl.-Chem. et al**
**Deichmannhaus am Hauptbahnhof**
**W-5000 Köln 1(DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

### FIELD OF THE INVENTION

This invention relates to melt processing techniques for polyvinyl chlorides. More particularly, this invention relates to techniques for reducing the heat exposure of polyvinyl chlorides prior to and during melt processing.

### BACKGROUND OF THE INVENTION

Objects formed from vinyl chloride polymers, that is, polyvinyl chloride (PVC) and post-chlorinated polyvinyl chloride (CPVC), are typically formed by shaping the vinyl chloride polymer while it is in a relatively molten state into a desired configuration. Generally such shaping techniques are characterizable as melt processing techniques and include such operations as melt spinning, compression molding, injection molding, and hot melt extrusion. In general, melt processing techniques require that the polyvinyl chloride or CPVC being formed into a desired object be maintained in a relatively molten state for an extended time period during which the polyvinyl chloride or CPVC can be subjected to substantially elevated shear while being formed. Typically, a temperature necessary to place the polyvinyl chloride or CPVC in a sufficiently flowable molten state is generally closely adjacent to and may exceed a temperature at which substantial thermal degradation of the polyvinyl chloride or CPVC occurs.

Particularly for CPVC having a chlorine content significantly in excess of 64% by weight, thermal degradation difficulties during melt processing can be distressing. For that and other reasons, it is typically desirable to include certain additives in the polyvinyl chloride or CPVC being melt processed. Generally such additives include a heat stabilizer to retard the onset of thermal degradation of the polyvinyl chloride or CPVC. A lubricant may be employed to assist in moving the polyvinyl chloride or CPVC through the melt processing device. Processing aids can be included to co-adhere particles of the polyvinyl chloride or CPVC during blending of the polyvinyl chloride or CPVC and additives prior to melt processing. Other polymeric materials may be included with the polyvinyl chloride or CPVC that can function to provide: an elevated thermal stability in a blend of polyvinyl chloride or CPVC and the other polymer, a lower temperature at which a molten-like or flowable state of the polyvinyl chloride or CPVC and the other polymer is achieved, or desirably elevated properties in a finished object formed from the polyvinyl chloride or CPVC and the other polymer. Other additives such as pigments may be included in polyvinyl chloride or CPVC introduced into a melt processing apparatus; suitable additives for these purposes are well known in the art.

Typically, such additives are incorporated into polyvinyl chloride or CPVC prior to forming an object from the polyvinyl chloride or CPVC employing melt processing techniques. Incorporation is typically accomplished by blending the additives into the polyvinyl chloride or CPVC at an elevated temperature sufficient to induce a semi-molten or relatively flowable state in the polyvinyl chloride or CPVC whereby the additives and the polyvinyl chloride or CPVC become intimately intermixed. Often, a heated, high shear blending apparatus is employed for intermixing the additives and the polyvinyl chloride or CPVC. The intermixture is then cooled and subdivided, typically by chopping, into pieces suitably sized for introduction into a melt processing means for forming a final, desired object. Exposure of the polyvinyl chloride or CPVC to elevated temperatures during intermixture with the additives can trigger undesirable thermal degradation of the polyvinyl chloride or CPVC.

Once in a melt processing device, the polyvinyl chloride or CPVC can be subjected to elevated temperatures likely to trigger thermal degradation while being heated to a temperature sufficiently elevated to provide the polyvinyl chloride or CPVC with a viscosity sufficiently reduced to provide desirable handling characteristics. An elevated amount of mechanical work is often necessary to assure a sufficient shear action within the melt processing device to provide acceptable mixing and material advance within the melt processing device.

It should be apparent then that methods for forming intermixtures of the additives and polyvinyl chloride or CPVC prior to introduction of the intermixture into a melt processing means for forming a final, desired object could find substantial utility in reducing the exposure of polyvinyl chloride or CPVC before melt processing to elevated temperatures likely to encourage thermal degradation. Likewise, polyvinyl chloride or CPVC compositions characterized by a significantly reduced melt viscosity could find substantial utility in melt processing technologies by virtue of requiring less mechanical work in effecting a melt processing operation and by providing a final polyvinyl chloride or CPVC with a significantly reduced heat history.

SUMMARY OF THE INVENTION

The present invention provides an improvement to polyvinyl chloride or CPVC melt processing techniques.

In detail, the present invention relates to a process wherein polyvinyl chloride or chlorinated polyvinyl chloride or mixtures thereof is melt processed, a method for reducing the viscosity of the polyvinyl chloride or chlorinated polyvinyl chloride or mixtures thereof during melt processing comprising the steps of: blending the polyvinyl chloride or chlorinated polyvinyl chloride or mixtures thereof with a polyacrylate or poly(vinyl ester) at a temperature not exceeding 200 °C and in a quantity of at least 2 % by weight but not more than 50 % by weight of the blend, the polyacrylate being of the form:

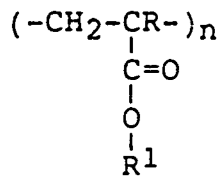

wherein R is hydrogen, methyl or ethyl, $R^1$ is an alkyl or unsaturated group of the form $C_xH_{2x+1}$ or $C_xH_{2x-1}$ and the poly(vinyl ester) being in the form:

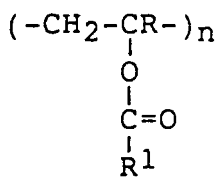

wherein R is as defined above, $R^1$ is an alkyl or unsaturated group as defined above where x is not less than 2 and not more than 25, or a glycidyl of the form:

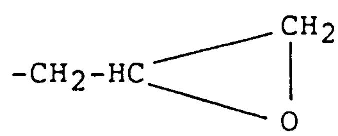

or a dialkylaminoethylacrylate of the form:

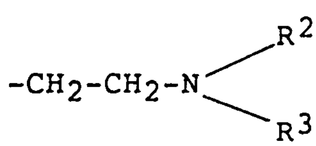

where $R^2$ and $R^3$ are alkyl of $C_1$-$C_{10}$ or radicals containing an ether linkage of the form $(R^4\text{-}O)_mR^5$ where $R^4$ is a linear or branched hydrocarbon paraffinic moiety of $C_2$-$C_5$ and $R^5$ is hydrogen or a paraffinic moiety of $C_1$-$C_5$ or $R^1$ is acrylamido, m is an integer of 1-5, and n is an integer sufficiently large to provide the polyacrylate or poly(vinylester) with a weight average molecular weight of not less than 3,000 nor more than 1,000,000.

Under the improved process of the instant invention the heat history of polyvinyl chloride or CPVC prior to melt processing to produce a final, desired object comprised of the polyvinyl chloride or CPVC is substantially reduced. Compositions for the practice of the method of the invention provide a substantially reduced melt viscosity at a given temperature and thereby permit the conducting of melt processing operations at a reduced temperature thereby lowering the heat history of any final desired polyvinyl chloride or CPVC article. A reduced heat history in processing polyvinyl chloride or CPVC to produce a final desired

object can result in a reduced degree of polyvinyl chloride or CPVC degradation in the final object.

In the practice of the instant invention, the heat history of polyvinyl chloride or CPVC being prepared for melt processing is reduced by blending the polyvinyl chloride or CPVC with additives desired to be present in a final, desired object, and a polyacrylate or or poly(vinyl ester) material. Desirably in certain preferred embodiments the blend forms a first two-phased system wherein the polyacrylate or poly(vinyl ester) constitutes a continuous phase of the first two-phased system and particulate polyvinyl chloride or CPVC and additives thereto constitute a discontinuous phase within the continuous phase. The first, two-phased system, upon being melt processed produces a final object characterized by a second, two-phased system wherein the polyvinyl chloride or CPVC constitutes a continuous phase and the acrylate or poly(vinyl ester) rubber and optionally certain of the additives constitute a discontinuous phase. Where first and second two-phased systems are formed in the practice of the instant invention it is preferable that the acrylate rubber comprise not more than 50% by weight of the first two-phased system and more preferably not more than 30%. More preferably, this acrylate rubber content should not exceed 15% by weight. Forming of a first two-phased system should be conducted at an upper temperature not exceeding 200 °C, and preferably not exceeding 150 °C. Maintaining a first two-phased system at a temperature below the upper temperature during formation of the two-phased system assists in assuring that significant thermal degradation of the polyvinyl chloride or CPVC does not occur prior to any final melt processing step to achieve the final, desired object.

In implementing these certain preferred embodiments of the improved processing method of the instant invention, a thermally invertible, under mechanical work, two-phased system results characterized by a first two-phased system formable at temperatures not exceeding 200 °C and preferably below 150 °C comprising a continuous acrylate or poly(vinyl ester) rubber phase and a polyvinyl chloride or CPVC and additive discontinuous phase. Upon application of additional heat to provide a more elevated temperature such as in a melt processing apparatus, the two-phased system of these certain preferred embodiments of the instant invention inverts to yield a polyvinyl chloride or CPVC continuous phase and a discontinuous phase comprised of acrylate or poly(vinyl ester) rubber and in some instances, certain of the additives. Inversion and distinct two-phased aspects of the system may be facilitated by the use of acrylate rubbers or poly-(vinyl ester) having minimal cure sites.

Alternately, in certain other preferred embodiments of the invention the acrylate polymer or poly(vinyl ester) can be introduced into the polyvinyl chloride or CPVC in a manner whereby a first two-phased system is not formed but rather the polyacrylate or poly(vinyl ester) and polyvinyl chloride or CPVC are merely intermixed, together with any other desired additives for inclusion in the final vinyl chloride product. The intermixture may be introduced into a melt processing device, and when heated to a desired temperature within the melt processing device, the resulting intermixture is possessed of a dramatically lowered viscosity when compared to the polyvinyl chloride or CPVC and additives absent the polyacrylate or poly(vinyl ester) at the same temperature within the melt processing device.

Compositions producing desirably reduced viscosity for blends of polyvinyl chloride or CPVC with the polyacrylates or poly(vinyl ester) include the polyacrylate or poly(vinyl ester) in a quantity of not more than 50% by weight of the blend. The polyacrylate is present in a quantity of not less than 2% by weight and for certain applications preferably not less than about 5% by weight and not more than 25% by weight. More preferably, the polyacrylate or poly(vinyl ester) does not exceed 12% by weight of the blend.

The acrylate polymer or poly(vinyl ester) is of the form:

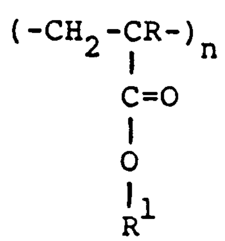

or

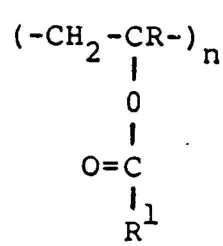

n is a number sufficient to produce a weight average molecular weight for the polymer of between 3000 and 1,000,000. R is hydrogen or methyl. $R^1$ is an alkyl or unsaturated group of the form $C_xH_{2x+1}$ or $C_xH_{2x-1}$ where x = 2-25 and preferably 3-18, but $R^1$ may be a glycidyl of the form:

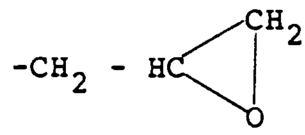

or a dialkylaminoethylacrylate of the form:

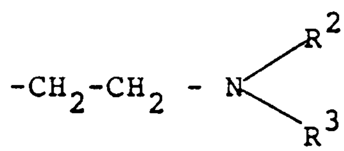

where $R^2$ and $R^3$ are alkyl or radicals containing an ether linkage of the form $(R^4\text{-O})_mR^5$ where $R^4$ is a linear or branched hydrocarbon paraffinic moiety of $C_2$-$C_5$ and $R^5$ is hydrogen or a low molecular weight paraffinic moiety of $C_1$-$C_5$ while $m = 1\text{-}5$. $R^1$ may also be acrylamido.

The resulting blends of polyvinyl chloride or CPVC and polyacrylate or poly(vinyl ester) regardless of the formation of first and second two-phased systems are possessed of physical properties generally closely resembling those of the polyvinyl chloride or CPVC without included polyacrylate or poly(vinyl ester), but are possessed of a melt viscosity that can approach an order of magnitude lower than the melt viscosity of polyvinyl chloride or CPVC absent included polyacrylate or poly(vinyl ester).

The above and other features and advantages of the instant invention will become more apparent when considered in light of a description of the preferred embodiments of the invention that follow constituting a part of this specification.

## DESCRIPTION OF THE DRAWINGS

Figure 1 is a photomicrograph generated by electron transmission microscopy.
Figure 2 is a graph plotting melt viscosity on an axis versus shear on an abscissa.
Figure 3 is a graphical representation of melt viscosity on an axis versus shear on an abscissa.
Figure 4 is a graphical representation of melt viscosity on an axis versus shear on an abscissa.
Figure 5 is a photomicrograph generated by electron transmission microscopy.

## BEST EMBODIMENT OF THE INVENTION

In the processing of polyvinyl chlorides or CPVC into a final, desired object, the present invention provides improvements that can function to reduce the heat history of the polyvinyl chloride or CPVC forming the desired final object and reduce the mechanical work necessary to achieve the desired final object. The improvement of the instant invention finds utility where polyvinyl chloride or CPVC is to be combined with one or more desirable additives such as pigments, thermal stabilizers, fibers and/or lubricants prior to forming into a desired, shaped object employing melt processing techniques as well as where it is desired only to process polyvinyl chloride or CPVC without additives.

With respect to the term vinyl chloride, as used herein, what is meant is any of polyvinyl chloride (PVC), post chlorinated polyvinyl chloride (CPVC) and mixtures thereof. Polyvinyl chloride is well known and readily commercially available. Chlorinated polyvinyl chloride is also well known and readily commercially available typically varying in chlorine content from between about 60% by weight to about 67% by weight. Higher chlorine contents in CPVC are known, however, and all such post chlorinated polyvinyl chlorides are contemplated as within the purview of this invention.

By the term melt processing as used herein, what is meant is techniques or procedures for forming desired objects from polyvinyl chloride or CPVC brought to a temperature sufficiently elevated whereby the polyvinyl chloride or CPVC assumes a relatively molten physical characteristic. The particular temperature at which a vinyl chloride achieves a desired degree of molten character is a function of chlorine content, weight average molecular weight, the particular degree of molten character required for implementing a particular melt processing technique, and additives present in the polyvinyl chloride or CPVC. Melt processing as a term, is meant to include but is not limited to such techniques as melt spinning, injection molding, hot melt extrusion, compression molding, blending to achieve a material desired for feeding a

further melt processing device, and casting.

By the term "additives" as used herein, what is meant is any of a number of materials other than polyvinyl chloride or CPVC included with polyvinyl chloride or CPVC being processed employing melt processing techniques to provide enhanced properties to the polyvinyl chloride or CPVC during processing or to any desired finished object being formed therefrom. Such additives may include heat stabilizers to improve the resistance of polyvinyl chloride or CPVC to temperatures associated with melt processing and/or subsequent end use of the desired final object; processing aids to assist in, for example, agglomerating polyvinyl chloride or CPVC particulates prior to achieving a molten-like state to facilitate handling, lubricants for improving flow characteristics of molten-like polyvinyl chloride or CPVC being melt processed; colorants; fillers and extenders; plasticizers; impact modifiers; and other suitable or conventional processing aids. Suitable such additive compounds are well known in the polyvinyl chloride or CPVC art, and the use of any one or mixtures thereof is contemplated as being within the purview of the invention.

The instant invention comprises a process for the production of a composition of matter that is a blend of polyvinyl chloride or CPVC and a polyacrylate polymer or poly(vinyl ester). The blend should include acrylate polymer or poly(vinyl ester) in a quantity of not less than 2% by weight and not more than 50% by weight of the blend. Preferable, the polyacrylate or poly(vinyl ester) is present in a quantity of at least 5% by weight and not less than 30% by weight, and most preferably the polyacrylate or poly(vinyl ester) content does not exceed 15% by weight.

In one preferred embodiment of the present invention, polyvinyl chloride or CPVC, and any desired additives are blended with acrylate polymer or poly(vinyl ester) to achieve a two-phased system wherein the polyacrylate or poly(vinyl ester) forms a continuous phase and the polyvinyl chloride or CPVC together with any desired additives form a discontinuous phase therein. This blending is conducted at a temperature significantly below the temperature at which the polyvinyl chloride or CPVC and additives together, but exclusive of the polyacrylate or poly(vinyl ester), provide a morphous, flowable, at least partially molten-like mass. Blending at this relatively low temperature reduces the history of heat exposure of the polyvinyl chloride or CPVC prior to any final melt processing of the polyvinyl chloride or CPVC blend to produce a final desired object. This blending of acrylate polymer or poly(vinyl ester), polyvinyl chloride or CPVC, and additives should be accomplished at a temperature not exceeding 200°C and preferably not exceeding 150°C in this particular preferred embodiment of the invention. Typically, the blending can be accomplished at a temperature not exceeding approximately 120°C.

The polyacrylate or poly(vinyl ester) is blended with the polyvinyl chloride or CPVC and additives to produce a two-phased system. The polyacrylate or poly(vinyl ester) comprises one phase of the two-phased system and represents a continuous phase. The polyvinyl chloride or CPVC and certain of the desired additives present in the blend constitute a second, discontinuous phase. This discontinuous phase is carried by the polyacrylate or poly(vinyl ester).

Acrylate polymer or poly(vinyl ester) has been found to possess an unusual capacity for carrying a large quantity of particulate solids while retaining a continuous phase character. Typically, as little as 20% by weight of the blend of polyacrylate or poly(vinyl ester) and particulate matter may be acrylate or poly-(vinyl ester) rubber while still maintaining a continuous polyacrylate or poly(vinyl ester) phase. In the practice of the instant invention, it has been found that as little as between 5% and 10% by weight polyacrylate or poly(vinyl ester) rubber need be present in order to continue to maintain a continuous acrylate polymer or poly(vinyl ester) phase. As, in the practice of the instant invention, it is desired that a final, desired object be formed from the blend having a preponderantly polyvinyl chloride or CPVC content, it is desirable that the blend include at least a preponderance of polyvinyl chloride or CPVC and additives.

The blend is formed by intermixing the acrylate polymer or poly(vinyl ester), polyvinyl chloride or CPVC, and desired additives in usual or conventional manner at a temperature not exceeding 200°C. Preferably, this mixing temperature does not exceed 150°C and most preferably mixing is accomplished at a temperature not exceeding 120°C. Preferably, mixing is accomplished in a blending or mixing device that can be cooled during mixing to avoid unacceptable elevation in temperature of the blend during mixing.

The two-phased system that results from blending the polyacrylate or poly(vinyl ester), the polyvinyl chloride or CPVC and any desired additives can be stored for extended periods owing to the pleasing storage stability of acrylate polymers or poly(vinyl ester). Dry storage, however, is preferred. The two phased blend wherein the polyacrylate or poly(vinyl ester) forms a continuous phase and the polyvinyl chloride or CPVC and any desired additives constitute a discontinuous phase can be subdivided for introduction into a melt processing device employing any suitable or conventional techniques such as cubing or pelletizing the two-phased system. From time to time dusting of the cubes or pellets such as with polyvinyl chloride or CPVC resin may be desirable to suppress reagglomeration, particularly where large proportions of polyacrylate or poly(vinyl ester) are employed. The two-phased system is then introduced

into the melt processing device and a desired finished object is thereby formed. The desired finished object is characterized by a second two-phased system wherein the relationship between the polyacrylate or poly-(vinyl ester) phase and the polyvinyl chloride or CPVC and additives phase has become inverted. In this second two-phased system, the polyvinyl chloride or CPVC constitutes a so-called continuous phase and the acrylate polymer or poly(vinyl ester), constitutes a discontinuous phase.

Where the acrylate polymer or poly(vinyl ester) employed in the practice of the invention is relatively free of reactive cure sites, the resulting desired finished object formed principally of polyvinyl chloride or CPVC more likely can be possessed of a somewhat enhanced impact resistance as a result of the polyacrylate or poly(vinyl ester) being present therein. The particular effect upon impact properties is in substantial measure a function of the particular polyacrylate(s) or poly(vinyl ester(s)) selected for blending. Additionally, it has been found that temperatures and mechanical work in a melt processing device necessary for achieving a desired final physical configuration of a desired final object can be substantially reduced where the polyacrylate (or poly(vinyl ester))-polyvinyl chloride (or CPVC) blend of the instant invention is employed in feeding the melt processing means. It is believed that the polyacrylate or poly-(vinyl ester) facilitates heat transfer within such a melt processing means and thereby facilitates achieving a molten state for the polyvinyl chloride or CPVC in a more orderly and rapid fashion. The polyacrylate or poly(vinyl ester) being present in the two-phase system introduced into the melt processing means is also believed to enhance flow characteristics of the polyvinyl chloride or CPVC that is provide a reduced viscosity, within the melt processing means thus permitting substantially reduced temperatures or allowing substantially reduced mechanical work to be invested in melt processing, or both.

In an equally preferred embodiment of the invention, the polyacrylate or poly(vinyl ester) is blended with the polyvinyl chloride or CPVC, but no effort is made to achieve a two-phased system of the polyacrylate or poly(vinyl ester) as a continuous phase and polyvinyl chloride or CPVC as a discontinuous phase therein before introduction into a melt processing device. Non-achievement of an integrated two phase system wherein the polyacrylate or poly(vinyl ester) comprises a continuous phase and the polyvinyl chloride or CPVC a discontinuous phase therein may be desirable where, for example, there is no particular desire or need to utilize the co-adhering properties of the acrylate polymer or poly(vinyl ester) in binding polyvinyl chloride or CPVC particulates prior to achieving a temperature sufficient to result in melt-like phase behavior of the blend. Notwithstanding the same desirable reduced viscosity properties are observed in these blends as with the continuous polyacrylate or poly(vinyl ester) phased two phase blends.

By the term "acrylate polymer" or "polyacrylate" or "poly(vinyl ester)" as used herein, what is meant is a homopolymer or a copolymer having a backbone comprising at least 95% and preferably in excess of 99% of the weight of the polymer and reactive cure sites comprising preferably less than 5% and more preferably less than 1% of the weight of the polymer. Such polymers are possessed of a somewhat elevated molecular weight, being characterized by a weight or viscosity average molecular weight of between 3,000 and 1,000,000.

The backbones are formed from monomeric acid esters. Such monomeric acid esters are of the form:

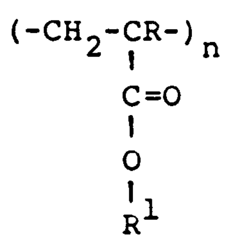

or

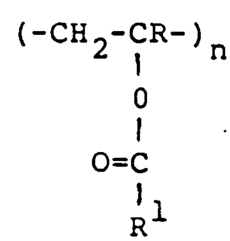

In the polyacrylates or poly(vinyl ester), R can be hydrogen or methyl. R can also be ethyl, since resulting blends with ethacrylates will perform in a manner similar to the methacrylates disclosed herein, however, such ethacrylates are not generally commercially available at present. $R^1$ is an alkyl or unsaturated group of the form $C_xH_{2x+1}$ or $C_xH_{2x-1}$ where x is not less than 2 nor more than 25, and preferably is not less than 3 nor more than 18. But $R^1$ may be a glycidyl of the form:

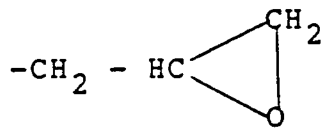

or a dialkylaminoethylacrylate of the form:

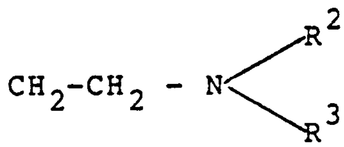

where $R^2$ and $R^3$ are alkyl ($C_1$-$C_{10}$) or radicals containing an ether linkage of the form $(R^4\text{-O-})_m R^5$ where $R^4$ is a linear or branched hydrocarbon paraffinic moiety of $C_2$-$C_5$ and $R^5$ is hydrogen or a low molecular weight paraffinic moiety of $C_1$ -$C_5$, and m is 1-5. $R^1$ may also be acrylamido. n is a number sufficient to produce a weight average molecular weight of between 3,000 and 1,000,000. Desirably, where R is methyl, x is at least 5. It is believed that viscosity enhancement in blends of the polyacrylates or poly(vinyl ester) and polyvinyl chlorides or CPVC is related to a generally smooth characteristic associated with the structure of the polyacrylate. For polyacrylates or poly(vinyl ester) having R as a methyl, longer chained $R^1$ moieties appear to provide more desirable viscosity enhancement than do such shorter chained moieties. Particularly stearyl, lauryl, and ethyl-hexyl moieties appear to give substantially enhanced viscosity reductions where R is methyl. Conversely, substantially enhanced viscosity reductions can be achieved with shorter chained such moieties where R is hydrogen; poly(n-butylacrylate) has been found desirably effective in reducing vinyl chloride viscosity in blends pursuant to the instant invention.

Reactive cure sites are provided generally by reactive groups pendant from the backbone of the copolymeric chain. Typically these pendant groups include a halogen and/or epoxy. Most typically the halogen is chlorine.

In the practice of the instant invention it is much preferred that the polyacrylate or poly(vinyl ester)not be possessed of reactive cure sites. For such non-reactive polyacrylates, the copolymer is comprised essentially completely of the polymerized monomeric acid esters. The absence of reactive cure sites would appear to be in keeping with a perceived desirability of a substantially smooth polyacrylate or poly(vinyl ester) structure.

The polyacrylate or poly(vinyl ester) typically is commercially available in a variety of physical forms including slab, powder, liquid, particulate, or crumb form, but the more finely divided forms such as powders, liquids, particulates, or crumbs are preferred in the practice of the instant invention. The choice of such form will depend upon in part the nature of the polyacrylate or poly(vinyl ester) chosen.

Polyvinyl chloride or CPVC employed in the practice of the instant invention is preferably in substantially finely divided particulate form. Preferably the particulates do not exceed a particle size capable of passing through a five mesh (4mm) screen. Particulate polyvinyl chloride (PVC) is typically available as a direct product of a vinyl chloride monomer polymerization process; particulate chlorinated polyvinyl chloride (CPVC) is typically available as a result of suspension chlorination techniques widely known in the art. Additives employed in the practice of the instant invention may be reduced to particulate form using well known techniques. However, some of the additives, being in liquid form, may require no such reduction.

Example I. A selection of chlorinated polyvinyl chlorides and polyvinyl chlorides were blended with stabilizers and polyacrylates in accordance with the proportions set forth in Table I on a laboratory Banbury® mixer. For each batch, the mixer was at an initial temperature corresponding to room temperature and mixing was conducted for three and one half minutes with cold water running through the mixer heat exchange surfaces. Each mix consumed approximately 220 watt hours with batches 1 and 3 reaching a final temperature of 102 ° C while batch No. 2 reached a final temperature of 157 ° C. Batches 1 and 3, upon being sheeted off, were chopped into 0.635 cm (quarter inch) cubes and dusted with CPVC and PVC respectively. Batch No. 2 required no dusting as the sheeted off and chopped compound was sufficiently hard to avoid tacking. Blend No. 3 was extruded using a Haake® extruder into 0.635 cm (quarter inch) diameter rods at a die temperature slightly in excess of 220 ° C. Compounds 1 and 2 each were fed into the Haake extruder and extruded at a die temperature of approximately 220 ° C. For batches 1 and 3 the extrudate upon cooling was found to exhibit the typical rigid, hard characteristics of PVC and for CPVC the typical hard, rigid and brownish characteristics whereas the materials fed into the extruder were tacky and

rubbery, more characteristic of a polyacrylate.

Compounds 1 and 3 were injection molded and seemed to go through a phase transition when reaching a temperature of 225°C and 210°C respectively. The injection molded material appeared to have all the physical characteristics of CPVC and PVC respectively. Batch No. 1, after extrusion, was submitted for electron microscopy analysis. Figure 1 represents an electron micrograph of batch No. 1 at 12,500 power magnification. Dark zones in Figure 1 represent the CPVC phase and the light zones in Figure 1 represent a polyacrylate phase dispersed in the CPVC phase. The dispersed polyacrylate is in miniscual form; the polyacrylate particles being extremely tiny and very well dispersed.

TABLE I

| Ingredient | Batch #1 Parts(wt.) | Batch #2 Parts (wt.) | Batch #3 Parts (wt.) |
|---|---|---|---|
| CPVC[1] 666x512 | 100 | - | - |
| PVC[1] Geon® 663x612 | - | 100 | - |
| PVC[1] Geon 103EP | - | - | 100 |
| S[2] | 3 | 3 | 3 |
| CPE[3] | 7 | 7 | 7 |
| K[4] | 2 | 2 | 2 |
| L[5] | 1.4 | 1.4 | 1.4 |
| HYCAR® 4001[1] | 10 | - | 10 |
| HYCAR 4051[1]CG | - | 10 | - |

[1] Available from BFGoodrich
[2] Tin Thioglycolate available from M & T Chemicals, Inc.
[3] Chlorinated polyethylene available from Dow Chemical Co.
[4] MBS modifier available from Borg Warner Corp.
[5] Oxidized polyethylene available from Allied Corp.

Example II. Blends of 90% by weight/10% by weight CPVC were formed with the following compounds: i) PMMA-a(atactic); ii) PMMA-s(syndiotactic); iii) PMMA-i(isotactic); and iv) Poly(n-butylacrylate) (PnBA). The resulting compounds were tested for melt viscosity versus shear rate at 200°C and results of such testing are displayed in Figure 2. Referring to Figure 2, the curves 21-24 represent the performance of pure CPVC, and CPVC/PMMA-a, CPVC/PMMA-s, and CPVC/PMMA-i blends respectively. The curve 25 represents the performance of the CPVC/PnBA blend. It may be seen that the performance of PnBA in a blend with CPVC produces almost an order of magnitude reduction in viscosity for any particular shear rate. For purposes of comparison, the viscosity versus shear rate performance of polyethylene (ICI 15033) and polypropylene (Solvay KS200), curves 26 and 27, are plotted. Blending to produce the blends of Figure 2 was accomplished on a Scamia Type M-75 laboratory two roll mill at a temperature of 190°C for three minutes after banding. The CPVC was commercially available from BFGoodrich under the designation 666x521 (63.5% by weight chlorine).

From Example II it may be seen that polymethylmethacrylate, regardless of form, does not produce a substantial decrease in viscosity in blends of CPVC or PVC whereas a longer chain acrylate such as n-butyl acrylate produces a surprising and substantial change in viscosity.

The poly(n-butylacrylate) was synthesized by solution radical polymerization in ethylacetate with the molecular weight being approximately 27,000 as shown by gel permeation chromatography. Syndiotactic and isotactic (PMMA-s and PMMA-i respectively) were prepared by anionic initiation in sec-BuLi, in pure tetrahydrofuran for syndiotactic PMMA, and in toluene for isotactic PMMA with the molecular weight for the syndiotactic PMMA being about 65,000 and for the isotactic PMMA being about 47,000. Atactic PMMA (PMMA-a) was the product Diakon obtained from ICI.

Example III. Blends of poly(stearylmethacrylate) poly(stearylacrylate), poly(2-ethylhexylmethacrylate), and poly(laurylmethacrylate) with CPVC (BFGoodrich 627 x 563 67% by wt. $Cl_2$) and a blend of poly(n-butylacrylate) with the same CPVC were prepared by milling on the two roll mill of Example II under identical conditions. The PnBA, poly(stearylmethacrylate) poly(laurylmethacrylate), poly(2-ethylhexylmethacrylate), and poly(stearylacrylate), were each present in a weight ratio of 7.5% of the respective blends. The blends and pure CPVC were subjected to a viscosity determination at varying shear rates and the results are documented in Figure 3. The performance of pure 67% by weight $Cl_2$ CPVC is depicted by the curve 31; the performance of the 7.5% blend of the poly(n-butylacrylate) with CPVC is depicted by the

curve 32 and a photomicrograph thereof at 20,000 magnification is shown in Figure 5 wherein the continuous phase is essentially CPVC and the co-adherent rubbery partices are a miscible blend of acrylate and CPVC; and the performance of a 7.5% by weight blends of
poly(stearylmethacrylate),
poly(laurylmethacrylate),
poly(2-ethylhexylmethacrylate), and
poly(stearylacrylate), with CPVC were statistically indistinguishable one from the next and are depicted by the curve 33. It is important to note that while the curves 32, 31 appear to be converging at more elevated shear rates, the curves 33, 31 appear to be substantially parallel at the more elevated shear rate. The improvement in viscosity of the blends, and particularly the blend of poly(stearylmethacrylate) versus pure CPVC approaches an order of magnitude.

Example IV. Poly(n-butylacrylate) was blended at 7.5% by weight into CPVC made experimentally by The B. F. Goodrich Company containing 70% by weight chlorine and into commercial Geon 103EP PVC available from The B. F. Goodrich Company according to Example II. The blends and the pure PVC and 70% CPVC were subjected to viscosity determination as a function of shear rate and the results are depicted in Figure 3 as curve 34 for the blend of 70% by weight $Cl_2$ CPVC and curve 35 for the pure 70% by weight chlorine CPVC. Again the poly(n-butylacrylate) blend at 7.5% produces a viscosity reduced by almost a factor of three from the viscosity of the pure CPVC. The curves 34, 35 appear to be nearly parallel indicating that even at relatively elevated shears, a substantially reduced viscosity can be obtained employing the blend of the instant invention. The viscosity of the Geon 103EP PVC is shown in Figure 3 as the curve 44 while the viscosity performance of the blend of PVC and poly(n-butylacrylate) is depicted by the curve 45. It is important to note that as shear rate increases for PVC the blend provides increasing viscosity advantages, approaching a half-order of magnitude at a shear rate $10^3$ and making the processing of high molecular weight PVC's more feasible.

Example V. Blends of poly(t-butylacrylate) were formed with 67% and 63.5% by weight chlorine containing CPVC's in accordance with Example II with the poly(t-butylacrylate) representing 7.5% by weight of the blend. The poly(t-butylacrylate) was prepared by anionic polymerization in tetrahydrofuran at -78°C. The poly(t-butylacrylate) was synthesized to have two separate weight average molecular weights, a weight average molecular weight of 5,000 and a weight average molecular weight of 100,000.

Referring to Figure 3, a graphic representation of the performance of the 63.5% CPVC with respect to viscosity as a function of shear rate is depicted at curve 36; the performance of a blend therewith of 5,000 weight average molecular weight poly(t-butylacrylate) is depicted by the curve 37, and the performance of a blend therewith of 100,000 weight average molecular weight poly(t-butylacrylate) is depicted by the curve 38. As may be seen, referring to Figure 3, the performance differences between poly(butylacrylates) of widely varying molecular weight are nominal.

Example VI. Blends were formed in accordance with Example II having the proportions of 67% by weight chlorine or 63.5% by weight chlorine and polyacrylates set forth in Table II. These blends, after compression molding at 190°C and subsequent cooling were subjected to testing for determination of physical performance characteristics. The results are set forth in Table II wherein $\sigma_y$ is the tensile strength to yield, $\sigma_b$ is the tensile strength to break $Kg/mm^2$ and $\epsilon_b$ is the percent elongation to break. These tensile tests were performed on a DY 24 traction apparatus made by Adamel-Lhomargy at a cross head speed of 2 centimeters per minute. Impact strength is reported in $Kgcm/cm^2$ as the result of a Charpy Notched test performed on a CEAST® apparatus.

It may be seen from Table II that the strength at both yield and break was not noteworthly modified by the inclusion of either polyacrylates or polymethacrylates. Accordingly, it is concluded that no spectacular decrease in tensile strength for CPVC occurs when the pure polymer is blended with a polyacrylate. Elongation at break was strongly increased by blending CPVC with polyacrylates or polymethacrylates other than PMMA. Impact strength measurements gave values very near or better than pure CPVC.

Referring to Table II it is apparent that the acrylates can also function to provide impact modification. Where other impact modifiers are employed the acrylates provide a synergistic increase in impact modification properties.

It is of interest that the molecular weight of the poly(t-butylacrylate) appears to have no effect on the mechanical values of the CPVC blends whereas the chlorine content of CPVC included in the blends modifies both tensile and impact strength value.

TABLE II

| PHYS PROP | $\sigma_y$ | $\sigma_b$ | $\epsilon_b$(%) | I.S. |
|---|---|---|---|---|
| CPVC 67% Cl/PMMA (atactic) | | | | |
| 100/0 | 6.3 | 6.2 | 5.2 | - |
| 95/5 | 6.0 | 6.0 | 4.7 | - |
| 90/10 | 6.5 | 6.5 | 5.3 | - |
| 80/20 | 6.7 | 6.7 | 5.4 | - |
| 60/40 | 7.7 | 7.7 | 6.3 | - |
| 50/50 | 3.4 | 3.4 | 2.4 | - |
| 40/60 | 4.1 | 4.1 | 3.1 | - |
| 20/80 | 4.5 | 4.5 | 3.2 | - |
| 0/100 | 5.7 | 5.7 | 3.8 | - |
| CPVC 67% Cl/PnHMA | | | | |
| 95/5 | 7.2 | 5.8 | 14.6 | 7.0 |
| 92.5/7.5 | 6.5 | 4.7 | 60.7 | 7.9 |
| CPVC 63.5% Cl/PnHMA | | | | |
| 95/5 | 6.9 | 5.0 | 59.1 | 7.9 |
| 92.5/7.5 | - | - | - | 6.8 |
| CPVC 67% Cl/PtBA | | | | |
| 92.5/7.5 | | | | |
| (5,000) | 7.8 | 6.6 | 9.4 | 6.5 |
| (100,000) | 7.3 | 6.3 | 12.3 | 6.6 |
| CPVC 63.5% Cl/PtBA | | | | |
| 95/5 (58,000) | 7.0 | 5.0 | 36.0 | 8.9 |
| 92.5/7.5 | | | | |
| (5000) | 7.2 | 5.4 | 19.0 | 8.5 |
| (100,000) | 6.9 | 5.2 | 18.2 | 7.3 |
| CPVC 67% Cl/PnBA | | | | |
| 100/0 | 6.5 | 6.5 | 5.2 | 7.8 |
| 97.5/2.5 | 8.0 | 6.2 | 23.3 | 7.9 |
| 95/5 | 6.8 | 5.2 | 31.7 | 8.4 |
| 92.5/7.5 | 6.8 | 5.2 | 27.3 | 13.1 |
| CPVC 63.5% Cl/PnBA | | | | |
| 100/0 | 7.4 | 5.0 | 15.5 | 9.0 |
| 97.5/2.5 | 6.6 | 5.6 | 24.0 | 8.4 |
| 95/5 | 6.6 | 4.9 | 52.8 | 8.1 |
| 92.5/7.5 | 6.0 | 4.6 | 71.7 | 10.2 |
| CPVC 67% Cl compounded by BFGoodrich | | | | |
| 100/0 | 6.2 | 4.7 | 44.5 | 15.3 |
| 92.5/7.5 | 4.6 | 4.0 | 37.2 | 36.0 |
| CPVC 67% Cl/Wax[1]/MBS[2]/PnBA | | | | |
| 100/0/0/0 | 6.5 | 6.5 | 5.2 | 7.8 |
| 94/1/5/0 | 7.2 | 5.6 | 39.3 | 9.9 |
| 87.3/.9/ 4.7/7.1 | 5.8 | 5.0 | 53.0 | 21.8 |

1 oxidized polyethylene
2 methacrylate-butadiene-styrene impact modifier

Example VII. Blends of polyacrylates such as poly(n-butylacrylate) in excess of about 10% by weight of PVC or CPVC in the blend can be difficult to achieve as the blend tends to achieve a sticky and/or cheesy texture. For example a blend containing 90% CPVC having a 63.5% by weight chlorine and a 10% by weight portion of poly(n-butylacrylate) having a molecular weight of 27,000 was mixed on a two roll mill in accordance with Example II, compression molded at 190°C, and cooled quickly. The resulting blend was sticky and brittle, the phases were large and very coarsely dispersed under transmission electron miscroscopy. But where the sample was left in the press and cooled very slowly under pressure at, typically, a rate of temperature decline of 10°C per hour after compression molding, the surface becomes smooth and sweet. Conversely, finely dispersed blends of 92.5% by weight of the CPVC and 7.5% by

weight of the poly(n-butylacrylate) as well as a blend of 92.5% Geon 103EP PVC and 7.5% by weight poly-(n-butylacrylate) were formed in accordance with Example II and heated on the plate of an optical microscope at a rate of 10 °C per minute up to 250 °C where degradation at last occurred. Photomicrographs were taken at selected temperatures prior to 250 °C; the blends remained very finely dispersed until 250 °C, the inference being that temperature variation does not appear to have a marked effect on blend morphology.

Example VIII. A plurality of blends of CPVC containing 63.5% chlorine by weight and 67% by weight were prepared with, respectively, 5% of poly(n-hexylmethyacrylate), poly(t-butylacrylate), poly(n-butylacrylate), and polyethylacrylate obtained from B.F.Goodrich Company. The polyethylacrylate was obtained in three molecular weights under B.F.Goodrich code Nos. 211-60-28-1,-30-1, and -32-1 having respectively Mooney viscosities (MC-4) of 42, 20, and 34 and respectively a percent gel in methylethylketone of 43.0, O, and O. After blending on a two roll mill in accordance with Example II, the samples were compression molded at 190 °C and cooled. Viscosity performance as a function of shear rate was determined for each of the compositions and the results are depicted in Figure 4 wherein the curve 50 represents a pure CPVC having 63.5% by weight chlorine reference standard, the curve 52 represents the performance of the polyethylacrylate blends wherein the performance of individual blends including polyethylacrylate having divers molecular weights was indistinguishable, curve 53 represents the performance of poly(n-hexylmethylacrylate), the curve 54 represents performance of poly(t-butylacrylate) blends and the curve 55 represents the performance of poly(n-butylacrylate).

Example IX. Blends of 67% by weight chlorine CPVC were formed in a 92.5/7.5 weight percent ratio with so-called core-shell structures formed of methacrylates and/or acrylates, available from Rohm & Haas under the designations KM680, KM334, KM653 and K120N (lots 795268; 702290; and 70184 of K120N). The performance of these "acrylic" modifiers was indistinguishable one from the next and each had no positive effect on viscosity of CPVC at elevated shear rates as evidenced by curve 43 in Figure 3.

In the foregoing examples, rheology measurements, that is, viscosity, were obtained with an Instron® 3211 capillary rheometer, the capillary dimensions were D = .1263 centimeters and L = 5.09 centimeters; the barrel diameter was .9525 centimeters. Working temperatures in the Instron were 200 °C and the four process speeds employed for determinations were 0.2, 2, 6 and 20 centimeters per minute.

While a preferred embodiment of the invention has been shown and described in detail, it should be apparent that various modifications and alterations may be made thereto without departing from the scope of the appended claims that follow.

**Claims**

**1.** In a process wherein polyvinyl chloride or chlorinated polyvinyl chloride or mixtures thereof is melt processed, a method for reducing the viscosity of the polyvinyl chloride or chlorinated polyvinyl chloride or mixtures thereof during melt processing comprising the steps of: blending the polyvinyl chloride or chlorinated polyvinyl chloride or mixtures thereof with a polyacrylate or poly(vinyl ester) at a temperature not exceeding 200 °C and in a quantity of at least 2 % by weight but not more than 50 % by weight of the blend, the polyacrylate being of the form:

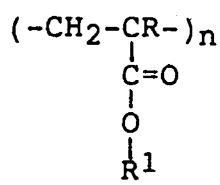

wherein R is hydrogen, methyl or ethyl, $R^1$ is an alkyl or unsaturated group of the form $C_xH_{2x+1}$ or $C_xH_{2x-1}$ and the poly(vinyl ester) being in the form:

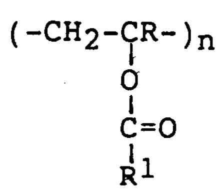

wherein R is as defined above, $R^1$ is an alkyl or unsaturated group as defined above where x is not less than 2 and not more than 25, or a glycidyl of the form:

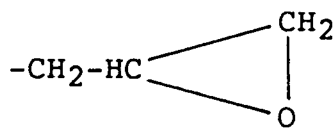

or a dialkylaminoethylacrylate of the form:

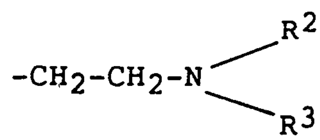

where $R^2$ and $R^3$ are alkyl of $C_1$-$C_{10}$ or radicals containing an ether linkage of the form $(R^4\text{-}O)_mR^5$ where $R^4$ is a linear or branched hydrocarbon paraffinic moiety of $C_2$-$C_5$ and $R^5$ is hydrogen or a paraffinic moiety of $C_1$-$C_5$ or $R^1$ is acrylamido, m is an integer of 1-5, and n is an integer sufficiently large to provide the polyacrylate or poly(vinylester) with a weight average molecular weight of not less than 3,000 nor more than 1,000,000.

2. In a process wherein a polyvinyl chloride or chlorinated polyvinyl chloride is blended with additives and then melt processed to form a desired, final object, the improvement comprising: forming a first two-phased system wherein a polyacrylate or poly(vinyl ester) as defined in claim 1 in a quantity of at least 10 % by weight but not more than 50 % by weight of the blend, constitutes a continuous phase and particulate polyvinyl chloride or chlorinated polyvinyl chloride consitutes a discontinuous phase therein; melt processing the first two-phase system to form an object characterized by a second two-phase system wherein the polyvinyl chloride or chlorinated polyvinyl chloride constitutes a continuous phase and the polyacrylate or poly(vinyl ester) constitute a discontinuous phase.

3. The process of claim 2, the polyacrylate or poly(vinyl ester) comprising not less than 20 % by weight of the first two-phase system.

4. The process of any one of claims 1-3, the polyacrylate or poly(vinyl ester) being essentially free of cure sites.

5. In a process wherein a polyvinyl chloride or chlorinated polyvinyl chloride is blended with additives and then melt processed to form a desired, final object, the improvement comprising: reducing the heat history of polyvinyl chloride or chlorinated polyvinyl chloride comprising the object by forming at a temperature not exceeding 200 °C a first two-phase system wherein a polyacrylate or poly(vinyl ester) as defined in claim 1 in a quantity of at least 10 % by weight but not more than 50 % by weight of the blend, constitutes a continuous phase and particulate polyvinyl chloride or chlorinated polyvinyl chloride constitutes a discontinuous phase therein; and
melt processing the first two-phased system to form a final object characterized by a second two-phased system wherein the polyvinyl chloride or chlorinated polyvinyl chloride constitutes a continuous phase and the polyacrylate or poly(vinyl ester) constitute a discontinuous phase.

6. The process of claim 5, the polyacrylate or polyvinyl ester comprising not less than 20 % by weight of the first two-phase system.

7. The process according to claims 5 or 6, the polyacrylate or polyvinyl ester being essentially free of cure sites.

**Patentansprüche**

1. In einem Verfahren, in dem Polyvinylchlorid oder chloriertes Polyvinylchlorid oder deren Mischungen in

der Schmelze verarbeitet werden, eine Methode zur Erniedrigung der Viskosität des Polyvinylchlorids oder des chlorierten Polyvinylchlorids oder der Mischungen derselben während der Verarbeitung in der Schmelze, umfassend die Schritte

des Mischens des Polyvinylchlorids oder des chlorierten Polyvinylchlorids oder der Mischungen derselben mit einem Polyacrylat oder einem Poly(vinylester) bei einer 200 °C nicht übersteigenden Temperatur und in einer Menge von wenigstens 2 Gew.-%, jedoch von nicht mehr als 50 Gew.-% des Gemischs, wobei das Polyacrylat eines der Form

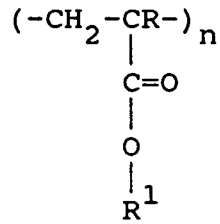

ist, worin

- R Wasserstoff, Methyl oder Ethyl ist,
- $R^1$ eine Alkyl-Gruppe oder eine ungesättigte Gruppe der Form $C_xH_{2x+1}$ oder $C_xH_{2x-1}$ ist,

und der Poly(vinylester) einer der Form

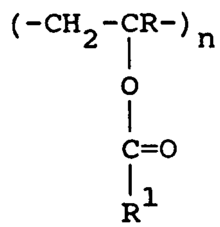

,

worin

- R die im vorstehenden angegebenen Bedeutungen hat,
- $R^1$ eine Alkyl-Gruppe oder eine ungesättigte Gruppe ist, wie sie im vorstehenden definiert ist,

wobei x nicht kleiner als 2 und nicht größer als 25 ist, oder ein Glycidyl der Form

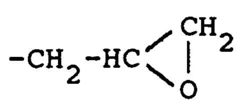

oder ein Dialkylaminoethylacrylat der Form

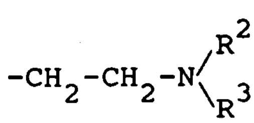

ist, worin

- $R^2$ und $R^3$ $C_1$-$C_{10}$-Alkyl-Reste oder eine Ether-Bindung enthaltende Reste der Form $(R^4\text{-}O)_mR^5$ bezeichnen, worin
- $R^4$ eine lineare oder verzweigte, paraffinische $C_2$-$C_5$-Kohlenwasserstoff-Einheit ist und
- $R^5$ Wasserstoff oder eine paraffinische $C_2$-$C_5$-Einheit ist, oder
- $R^1$ Acrylamido ist,
- m eine ganze Zahl von 1 bis 5 ist und
- n eine ganze Zahl ist, die genügend groß ist, um das Polyacrylat oder den Polyvinylester mit einem Gewichtsmittel des Molekulargewichts von nicht weniger als 3 000 und

nicht mehr als 1 000 000 zu versehen.

2. Verbesserung in einem Verfahren, in dem ein Polyvinylchlorid oder chloriertes Polyvinylchlorid mit Additiven gemischt und in der Schmelze zur Bildung eines gewünschten fertigen Gegenstandes verarbeitet wird, umfassend das Bilden eines ersten zweiphasigen Systems, worin ein Polyacrylat oder ein Poly(vinylester), wie sie in Anspruch 1 definiert sind, in einer Menge von wenigstens 10 Gew.-%, jedoch von nicht mehr als 50 Gew.-% des Gemischs eine geschlossene Phase bildet und teilchenförmiges Polyvinylchlorid oder chloriertes Polyvinylchlorid in dieser eine unterbrochene Phase bildet; das Verarbeiten des ersten zweiphasigen Systems in der Schmelze zur Bildung eines Gegenstandes, der durch ein zweites zweiphasiges System gekennzeichnet ist, worin das Polyvinylchlorid oder das chlorierte Polyvinylchlorid eine geschlossene Phase bildet und das Polyacrylat oder der Poly(vinylester) eine unterbrochene Phase bilden.

3. Verfahren nach Anspruch 2, worin das Polyacrylat oder der Poly(vinylester) nicht weniger als 20 Gew.-% des ersten zweiphasigen Systems ausmachen.

4. Verfahren nach irgendeinem der Ansprüche 1 bis 3, worin das Polyacrylat oder der Poly(vinylester) im wesentlichen frei von Aushärtungs-Zentren sind.

5. Verbesserung in einem Verfahren, in dem ein Polyvinylchlorid oder chloriertes Polyvinylchlorid mit Additiven gemischt und in der Schmelze zur Bildung eines gewünschten fertigen Gegenstandes verarbeitet wird, umfassend das Vermindern des zeitlichen Verlaufs der Wärmebeanspruchung des den Gegenstand umfassenden Polyvinylchlorids oder chlorierten Polyvinylchlorids, durch Bilden eines ersten zweiphasigen Systems bei einer Temperatur, die 200 °C nicht überschreitet, worin ein Polyacrylat oder ein Poly(vinylester), wie sie in Anspruch 1 definiert sind, in einer Menge von wenigstens 10 Gew.-%, jedoch von nicht mehr als 50 Gew.-% des Gemischs eine geschlossene Phase bildet und teilchenförmiges Polyvinylchlorid oder chloriertes Polyvinylchlorid in dieser eine unterbrochene Phase bildet; und das Verarbeiten des ersten zweiphasigen Systems in der Schmelze zur Bildung eines Gegenstandes, der durch ein zweites zweiphasiges System gekennzeichnet ist, worin das Polyvinylchlorid oder das chlorierte Polyvinylchlorid eine geschlossene Phase bildet und das Polyacrylat oder der Poly(vinylester) eine unterbrochene Phase bilden.

6. Verfahren nach Anspruch 5, worin das Polyacrylat oder der Poly(vinylester) nicht weniger als 20 Gew.-% des ersten zweiphasigen Systems ausmachen.

7. Verfahren nach den Ansprüchen 5 oder 6, worin das Polyacrylat oder der Poly(vinylester) im wesentlichen frei von Aushärtungs-Zentren sind.

**Revendications**

1. Dans un procédé de transformation par fusion d'un poly(chlorure de vinyle) ou d'un poly(chlorure de vinyle) chloré, ou de mélanges de ceux-ci, procédé qui consiste à réduire la viscosité du poly(chlorure de vinyle) ou du poly(chlorure de vinyle) chloré, ou de mélanges de ceux-ci, pendant la transformation par fusion, comprenant les étapes qui consistent à : mélanger le poly(chlorure de vinyle) ou le poly-(chlorure de vinyle) chloré, ou des mélanges de ceux-ci, avec un polyacrylate ou un poly(ester vinylique), à une température ne dépassant pas 200 °C et en une quantité d'au moins 2% en poids, mais d'au plus 50% en poids, du mélange, le polyacrylate répondant à la formule :

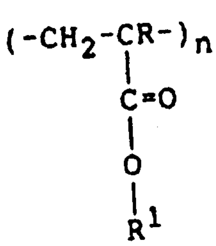

dans laquelle R est un hydrogène, ou un groupe méthyle ou éthyle, $R^1$ est un groupe alkyle ou un groupe insaturé de formule $C_xH_{2x+1}$ ou $C_xH_{2x-1}$ et le poly(ester vinylique) répondant à la formule :

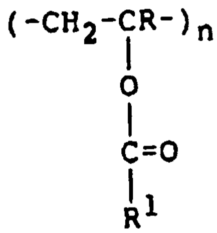

dans laquelle $R^1$ est tel que défini ci-dessus, $R^1$ est un groupe alkyle ou un groupe insaturé tel que défini ci-dessus, dans lequel x n'est pas inférieur à 2 et pas supérieur à 25, ou un groupe glycidyle de formule :

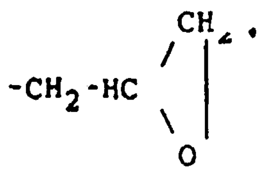

ou un acrylate de dialkylaminoéthyle de formule :

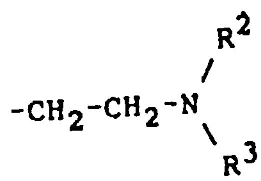

dans laquelle $R^2$ et $R^3$ sont des groupes alkyle en $C_1$-$C_{10}$ ou des radicaux contenant une liaison éther de formule $(R^{4-0)}m^{R}5$, dans laquelle $R^4$ est un groupement paraffinique hydrocarboné linéaire ou ramifié en $C_2$-$C_5$ et $R^5$ est un hydrogène ou un groupement paraffinique en $C_1$-$C_5$ ou $R^1$ est un groupe acrylamido, m est un nombre entier de 1-5 et n est un nombre entier suffisamment grand pour conférer au polyacrylate ou au poly(ester vinylique) une masse moléculaire moyenne en poids d'au moins 3 000 et d'au plus 1 000 000.

**2.** Dans un procédé qui consiste à mélanger un poly(chlorure de vinyle) ou un poly(chlorure de vinyle) chloré avec des additifs, puis à le transformer par fusion pour former un objet final voulu, l'amélioration comprenant les étapes qui consistent à : former un premier système à deux phases dans lequel un polyacrylate ou un poly(ester vinylique) tel que défini dans la revendication 1, en une quantité d'au moins 10% en poids, mais d'au plus 50% en poids, du mélange, constitue une phase continue et le poly(chlorure de vinyle) ou le poly(chorure de vinyle)chloré particulaire constitue une phase discontinue dans celle-ci; transformer par fusion le premier système à deux phases pour former un objet caractérisé par un second système à deux phases dans lequel le poly(chlorure de vinyle) ou le poly-(chlorure de vinyle) chloré constitue une phase continue et le polyacrylate ou le poly(ester vinylique) constitue une phase discontinue.

**3.** Procédé selon la revendication 2, dans lequel le polyacrylate ou le poly(ester vinylique) ne constitue pas moins de 20% en poids du premier système à deux phases.

**4.** Procédé selon l'une quelconque des revendications 1-3, dans lequel le polyacrylate ou le poly(ester vinylique) est essentiellement exempt de sites de réticulation.

5. Dans un procédé qui consiste à mélanger un poly(chlorure de vinyle) ou un poly(chlorure de vinyle) chloré avec des additifs, puis à le transformer par fusion pour former un objet final voulu, l'amélioration comprenant les étapes qui consistent à : réduire les antécédents thermiques du poly(chlorure de vinyle) ou du poly(chlorure de vinyle) chloré constituant l'objet en formant, à une température ne dépassant pas 200 ° C, un premier système à deux phases dans lequel un polyacrylate ou un poly-(ester vinylique) tel que défini dans la revendication 1, en une quantité d'au moins 10% en poids, mais d'au plus 50% en poids, du mélange, constitue une phase continue et le poly(chlorure de vinyle) ou le poly(chlorure de vinyle) chloré particulaire constitue une phase discontinue dans celle-ci; et transformer par fusion le premier système à deux phases pour former un objet caractérisé par un second système à deux phases dans lequel le poly(chlorure de vinyle) ou le poly(chlorure de vinyle) chloré constitue une phase continue et le polyacrylate ou le poly(ester vinylique) constitue une phase discontinue.

6. Procédé selon la revendication 5, dans lequel le polyacrylate ou le poly(ester vinylique) ne constitue pas moins de 20% en poids du premier système à deux phases.

7. Procédé selon la revendication 5 ou 6, dans lequel le polyacrylate ou le poly(ester vinylique) est essentiellement exempt de sites de réticulation.

FIG.1

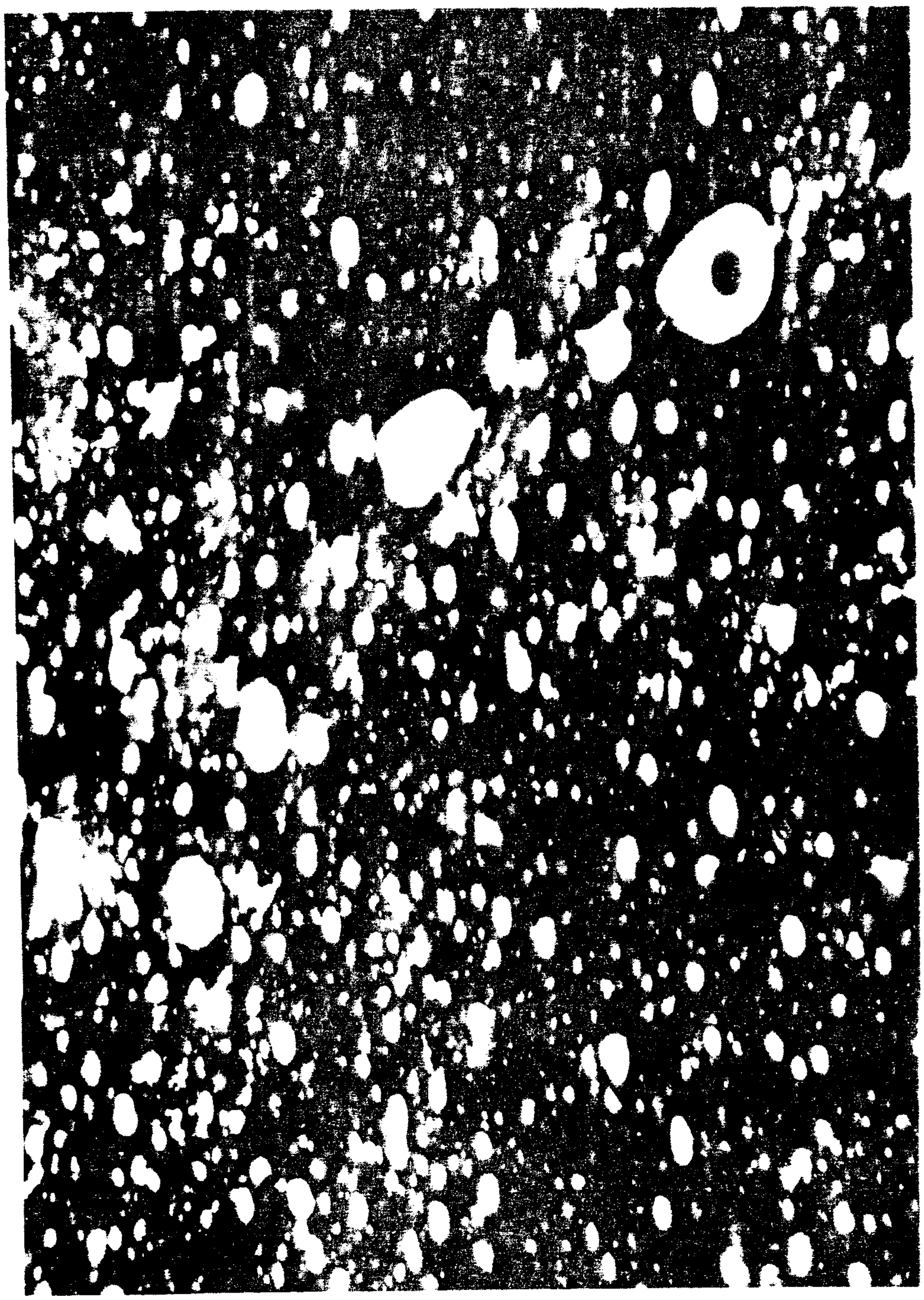

FIG. 2

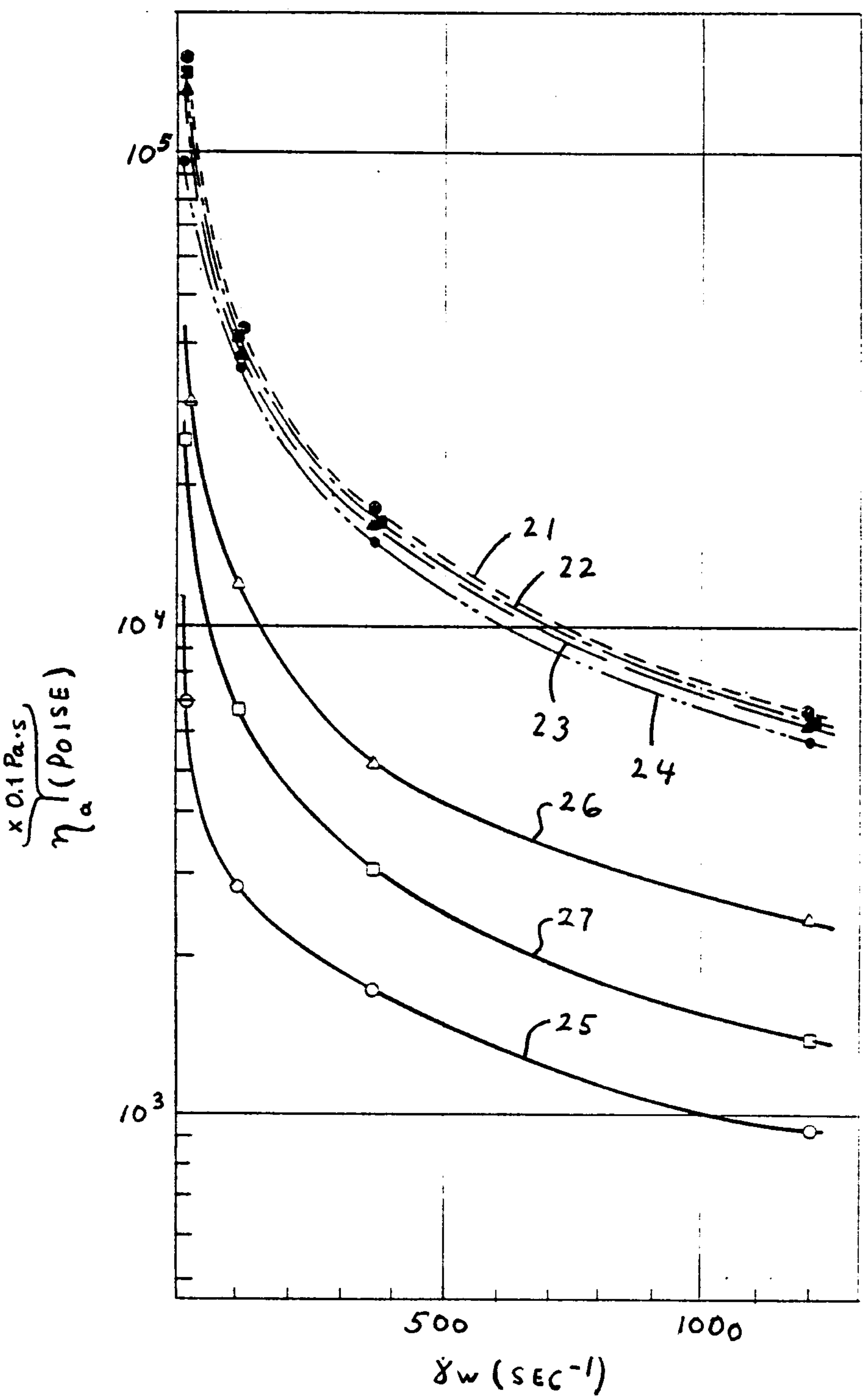
$10^5$
$10^4$
$10^3$
21
22
23
24
26
27
25
500
1000
$\eta_a$ (POISE) x 0.1 Pa·s
$\dot{\gamma}_w$ (SEC$^{-1}$)

FIG. 3

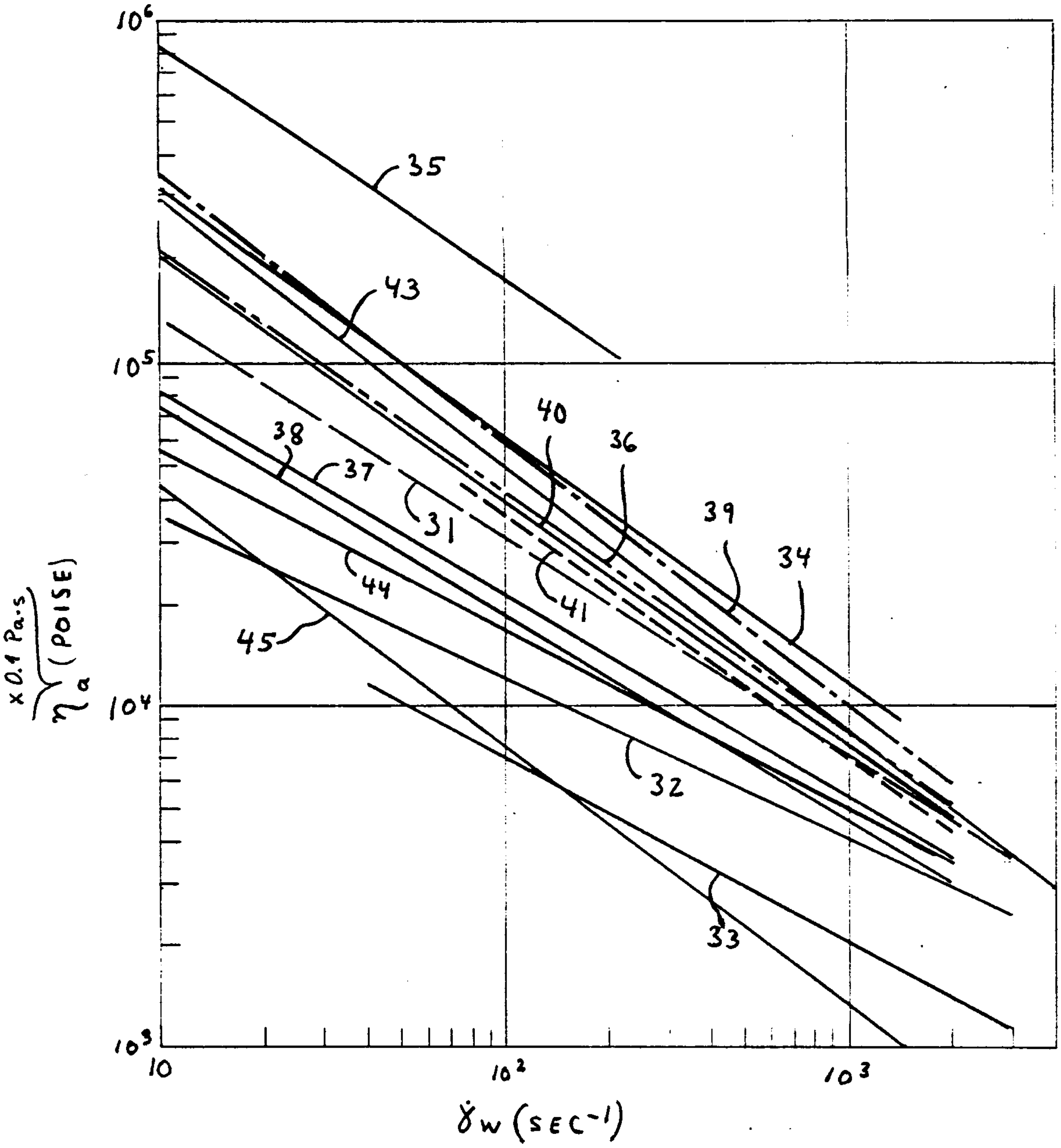

10⁶
10⁵
10⁴
10³
10
10²
10³
35
43
40
36
38
37
31
39
34
44
41
45
32
33
x 0.1 Pa·s
ηa (POISE)
γ̇w (SEC⁻¹)

FIG. 4

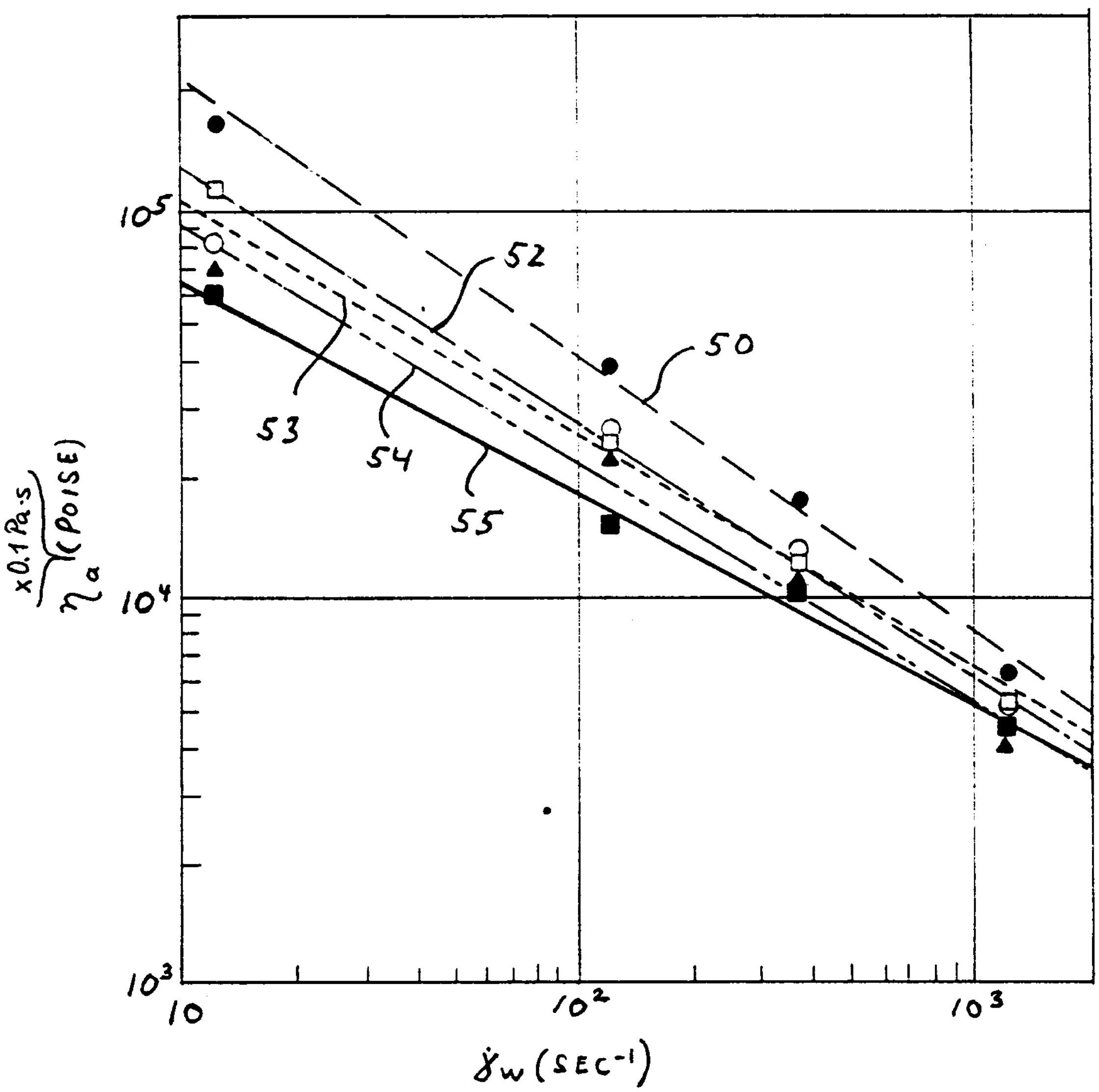
52
50
53
54
55
$10^5$
$10^4$
$10^3$
10
$10^2$
$10^3$
x0.1 Pa·s
$\eta_a$ (POISE)
$\dot{\gamma}_w$ (SEC$^{-1}$)

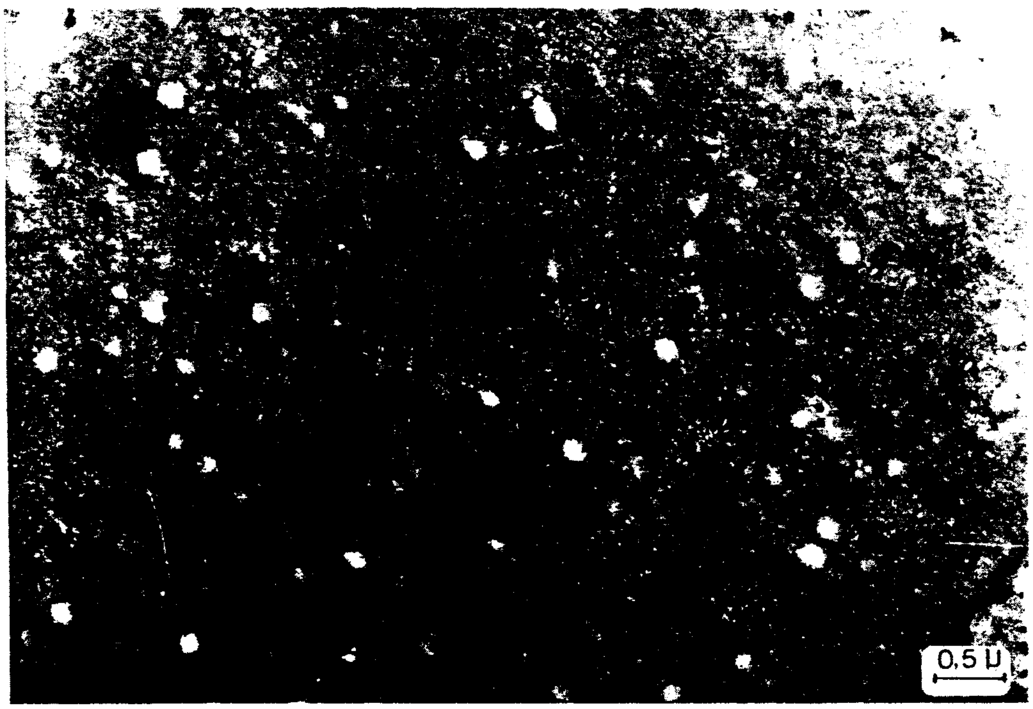


FIG.5